# EUROPÄISCHE PATENTSCHRIFT

(11) **EP 3 699 379 B1**
(45) Veröffentlichungstag und Bekanntmachung des Hinweises auf die Patenterteilung: **04.05.2022**
(21) Anmeldenummer: 20164381.4
(22) Anmeldetag: 22.03.2016
(51) Int. Cl.: E05B 81/14, E05B 81/20

(54) **KRAFTFAHRZEUGSCHLOSS**
MOTOR VEHICLE LOCK
SERRURE DE VÉHICULE AUTOMOBILE

(30) Priorität: 27.03.2015 DE 102015003918
(43) Veröffentlichungstag der Anmeldung: 26.08.2020
(62) Teilanmeldung aus: 16734552.9
(73) Patentinhaber: Kiekert AG, 42579 Heiligenhaus (DE)
(72) Erfinder: BENDEL, Thorsten, 46149 Oberhausen (DE)

(56) Entgegenhaltungen:
- EP-A2- 0 310 993
- DE-A1- 10 111 240
- DE-A1-102011 015 669
- DE-U1- 20 016 292
- DE-U1- 29 812 121
- US-A- 4 756 562
- US-A1- 2003 122 382

## Beschreibung

Die Erfindung betrifft ein Kraftfahrzeugschloss aufweisend ein Gesperre mit einer Drehfalle und mindestens einer Sperrklinke, wobei mittels der Sperrklinke eine Drehbewegung der Drehfalle sperrbar ist, eine Antriebseinrichtung, mit der die Sperrklinke aus einer Sperrstellung in eine Freigabestellung für das Gesperre überführbar ist und einer Ausstelleinrichtung, wobei mittels der Ausstelleinrichtung ein das Kraftfahrzeugschloss aufnehmendes Fahrzeugteil aus einer Schließstellung heraus in eine Öffnungsstellung bewegbar ist.

Die Bedienung eines Kraftfahrzeugs wird durch elektronische und elektrische Hilfsmittel mehr und mehr vereinfacht. So ist das Ver- und Entriegeln mittels einer Funkfernsteuerung mittlerweile mehr zur Regel als zur Ausnahme geworden. Bekannt ist es ebenfalls, dass neben dem Ver- und Entriegeln eines Kraftfahrzeugschlosses auch ein elektrisches Öffnen des Schließmechanismusses, vorzugsweise eines Gesperres, ausgeführt werden kann. Ist das Gesperre geöffnet, so kann beispielsweise eine Kraftfahrzeugtür ohne die manuelle Betätigung eines Außenbetätigungsgriffes geöffnet werden.

Aus der DE 298 12 121 U1 ist ein Heckklappenverschluss bekannt, der neben einem elektrischen Öffnungsmechanismus zusätzlich ein Huborgan beinhaltet, mit dem die Heckklappe in eine Öffnungsstellung überführbar ist. Der Verschluss beinhaltet einen elektrischen Antrieb, der auf eine Hebelkette wirkt, mittels der das Gesperre entsperrbar ist. Ist das Gesperre entsperrt und gibt den Schlosshalter frei, so kann die Heckklappe geöffnet werden. Neben dem elektrischen Öffnen umfasst der Verschlussmechanismus ein Huborgan, wobei mittels des Huborgans die Heckklappe in eine Öffnungsstellung überführbar ist. Die Öffnungsstellung ermöglicht es dem Bediener dann, einen Griff oder die Heckklappe selbst leicht zu ergreifen und vollständig zu öffnen.

Aus der DE 10 2011 015 669 A1 ist ein Aussteller für Kraftfahrzeugtüren oder Klappen bekannt, mit dem eine Tür, Klappe oder Haube aus einer Schließstellung in eine Öffnungsstellung überführbar ist. Bezieht sich die Ausstelleinrichtung zum Beispiel auf eine Kraftfahrzeugseitentür, so kann die Tür beispielsweise mittels eines elektrischen Impulses geöffnet werden. Dazu muss zuerst das Gesperre des Türschlosses vorzugsweise elektrisch entsperrt werden, so dass die Tür öffenbar ist. Reicht nun beispielsweise der Türdichtungsdruck nicht aus, um die Tür von der Schließstellung in eine Öffnungsstellung zu überführen, so kann mittels der Ausstelleinrichtung Tür in eine Öffnungsstellung überführt werden. Eine Öffnungsstellung definiert sich hierbei in der Weise, dass der Bediener des Kraftfahrzeugs in der Lage ist, die Tür derart zu ergreifen, dass er die Tür vollständig öffnen kann. Als Ausstelleinrichtung dient hierbei ein elektrischer Antrieb, der über eine Antriebsklinke und einen Innen- und Außenhebel mechanisch in Form einer Schwenkbewegung der Hebel auf die Kraftfahrzeugtür einwirkt.

Eine unmittelbar in einen Kraftfahrzeugtürverschluss integrierte Ausstelleinrichtung ist aus der DE 200 16 292 U1 bekannt geworden. Das aus einer Sperrklinke und einer Drehfalle bestehende Schloss weist einen Sperrklinkenantrieb auf, mit dem die Sperrklinke außer Eingriff mit der Drehfalle gebracht werden kann. Nach einem elektrischen Betätigen bewegt der Sperrklinkenantrieb die Sperrklinke aus dem Eingriffsbereich der Drehfalle und gibt somit den Schlosshalter frei, wodurch die Klappe, Haube oder Tür geöffnet werden kann. Der Sperrklinkenantrieb bewegt sich nun weiter und zieht über einen Verbindungshebel zwischen Sperrklinke und Drehfalle die Drehfalle in eine Position, in der der Schlosshalter nicht nur freigegeben wird, sondern die Drehfalle sich auf dem Schlosshalter abstützt und das Kraftfahrzeugteil, wie Haube, Klappe oder Tür, in eine Öffnungsstellung hebt oder bewegt. Dadurch wird ein Spalt zwischen Kraftfahrzeugteil und Kraftfahrzeugkarosserie erzeugt, wobei der Spalt die Bedienfreundlichkeit erhöht.

Ein Problem, das sich bei den bekannten Ausstelleinrichtung einstellt, ist das, dass nach einem Öffnen des Gesperres und einem Bewegen der Tür, Klappe oder Haube sich dieses Kraftfahrzeugteil in eine undefinierbare Position hinein bewegt. Je nach Lage oder Ausrichtung des Kraftfahrzeugs kann es dabei vorkommen, dass sich zum Beispiel eine Kraftfahrzeugtür in eine mehr oder weniger große Öffnungsstellung hinein bewegt. Dieser undefinierbare Zustand ist nicht gewollt und kann ebenfalls zu Behinderungen oder Schäden am Kraftfahrzeug führen.

Aufgabe der Erfindung ist es, ein verbessertes Kraftfahrzeugschloss bereitzustellen. Darüber hinaus ist es Aufgabe der Erfindung, eine Möglichkeit zu schaffen, das Kraftfahrzeugteil in eine definierte Lage zu bringen, um Schäden oder Fehlbetätigungen zu vermeiden. Darüber hinaus ist es Aufgabe der Erfindung, eine konstruktiv einfache und kostengünstige Lösung bereitzustellen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Gemäß dem Patentanspruch 1 wird die Aufgabe der Erfindung dadurch gelöst, dass ein Kraftfahrzeugschloss bereitgestellt wird, aufweisend ein Gesperre mit einer Drehfalle und mindestens einer Sperrklinke, wobei mittels der Sperrklinke eine Drehbewegung der Drehfalle sperrbar ist, eine Antriebseinrichtung, mit der die Sperrklinke aus einer Sperrstellung in eine Freigabestellung für das Gesperre überführbar ist und einer Ausstelleinrichtung, wobei mittels der Ausstelleinrichtung ein das Kraftfahrzeugschloss aufnehmendes Fahrzeugteil aus einer Schließstellung heraus in eine Öffnungsstellung bewegbar ist und wobei die Ausstelleinrichtung das Kraftfahrzeugteil in seiner Öffnungsstellung hält, so dass ein selbständiges Öffnen des Kraftfahrzeugteils über die Öffnungsstellung hinaus unterbindbar ist, wobei die Ausstelleinrichtung in das Kraftfahrzeugschloss zumindest teilweise integriert ist, wobei die Ausstelleinrichtung ein Ausstellmittel aufweist, wobei das Ausstellmittel derart in der Ausstelleinrichtung bewegbar ist, dass das Ausstellmittel aus der Kraftfahrzeugtür heraus bewegbar und mittels des Ausstellmittels die Kraftfahrzeugtür in die Öffnungsstellung bewegbar ist, wobei das Ausstellmittel mit einem Schlosshalter, Schlosshalterbolzen oder Schlosshalterbügel zusammenwirkt.

Durch die erfindungsgemäße Ausbildung der Ausstelleinrichtung ist nun die Möglichkeit geschaffen, ein unbeabsichtigtes Öffnen des Kraftfahrzeugteils zu unterbinden. Die Ausstelleinrichtung hält das Kraftfahrzeugteil in seiner geöffneten Stellung, so dass ein vollständiges selbständiges Öffnen des Kraftfahrzeugteils sicher verhindert wird. Insbesondere ermöglicht es die Öffnungsstellung dem Bediener, die Tür zu ergreifen und bequem zu öffnen. Die Öffnungsstellung kann dabei je nach Kraftfahrzeugteil variieren. Die Öffnungsstellung ist aber bevorzugt die Stellung, in der ein Hineingreifen in einen sich durch die Öffnungsstellung bildenden Spalt ermöglicht wird. Dabei wird das Kraftfahrzeugteil, das zum Beispiel eine Tür, eine Klappe, eine Motorhaube, eine Schiebetür oder beispielsweise auch ein Handschuhfach sein kann, von der Ausstelleinrichtung in der Öffnungsstellung fixiert bzw. gehalten.

Die Erfindung bezieht sich auf ein Kraftfahrzeugschloss, wobei hier nicht ausschließlich ein Kraftfahrzeugtürschloss beansprucht wird, sondern ebenfalls Schlösser gemeint sein können, die als Motorhaubenschlösser, Heckklappenschlösser, Schiebetürenschlösser, Tankschlösser oder Klappenschlösser, sowie all jene Kraftfahrzeugteile, die eine automatische Öffnungseinrichtung aufweisen und vor einem vollständigen Öffnen geschützt werden sollen. Bevorzugt bezieht sich die Erfindung auf Kraftfahrzeugtürschlösser mit einem Gesperre, aufweisend eine Drehfalle und mindestens eine Sperrklinke.

Die Drehfalle ist bevorzugt drehbar im Kraftfahrzeugschloss aufgenommen und wirkt mit einem Schlosshalter oder Schlossbügel zusammen. Bewirkt das Zusammenspiel zwischen Schlosshalter und Drehfalle beispielsweise eine Drehbewegung der Drehfalle in Schließrichtung, so wirkt die Sperrklinke zum Beispiel federbelastet mit der Drehfalle zusammen, so dass die Drehfalle in ihrer Schließstellung fixiert bzw. gehalten wird. Die Sperrklinke sperrt die Drehbewegung der Drehfalle.

Eine bevorzugt elektrisch betätigte Antriebseinrichtung wirkt auf die Sperrklinke und kann die Sperrklinke aus ihrer Sperrstellung in eine Freigabestellung überführen, so dass die Drehfalle frei wird und das Gesperre öffnet. Derartige Kraftfahrzeugschlösser werden auch als elektrische Schlösser oder E-Schlösser und der Vorgang des Entsperrens als elektrisches Öffnen bezeichnet. Insbesondere bei E-Schlössern, bei denen das Gesperre zum Beispiel elektrisch freigegeben wird, kann zum Beispiel ein Türdichtungsdruck dazu dienen, das Kraftfahrzeugteil aus einer Schließstellung in eine Öffnungsstellung zu überführen.

Ist nun beispielsweise der Türdichtungsdruck nicht ausreichend um die Kraftfahrzeugtür aus der Schließstellung in eine Öffnungsstellung zu bewegen, so dass ein Bediener die Tür ergreifen und vollständig öffnen kann, so dient die Ausstelleinrichtung dazu, die Kraftfahrzeugtür in eine Öffnungsstellung zu überführen. Steht das Kraftfahrzeug dabei zum Beispiel in einem ungünstigen Winkel, zum Beispiel auf einer geneigten Straße, so kann es vorkommen, dass der Bediener das E-Schloss elektrisch öffnet und dass die Kraftfahrzeugtür aus der Schließstellung in eine Stellung weit über die Öffnungsstellung hinaus selbständig öffnet. Dies kann zu Behinderungen, Beschädigungen an der Tür oder schlimmstenfalls zu Verletzungen führen. Die erfindungsgemäße Ausstelleinrichtung mit einer Haltefunktion ermöglicht es hierbei, dass die Kraftfahrzeugtür oder das Kraftfahrzeugteil in der Öffnungsstellung positioniert bzw. gehalten wird.

Erfindungsgemäß ist die Ausstelleinrichtung in das Kraftfahrzeugschloss zumindest teilweise integriert. Ist die Ausstelleinrichtung Teil des Kraftfahrzeugschlosses, so kann einerseits Bauraum eingespart werden und darüber hinaus wird die Montage der Ausstelleinrichtung erleichtert. Als Teil des Kraftfahrzeugschlosses kann darüber hinaus auch auf die elektrischen oder elektronischen Bestandteile des Kraftfahrzeuges zurückgegriffen werden, so dass darüber hinaus die Ausstelleinrichtung keine separate Stromversorgung benötigt. Ebenso könnte die Ausstelleinrichtung derart im Kraftfahrzeugschloss angeordnet sein, dass keine zusätzlichen Öffnungen in die Kraftfahrzeugtür eingelassen werden müssen oder dass vorhandene Öffnungen lediglich geringfügig modifiziert werden müssen, um eine erfindungsgemäße Ausstelleinrichtung in ein Kraftfahrzeug zu integrieren.

Bildet die Antriebseinrichtung einen Antrieb für die Ausstelleinrichtung, so ergibt sich eine weitere Ausführungsform der Erfindung. Als Antriebseinrichtung zum elektrischen Öffnen des Kraftfahrzeugschlosses dient bevorzugt ein Elektromotor, der beispielsweise mit einem Getriebe auf eine Stelleinrichtung einwirkt, so dass die Sperrklinke von der Drehfalle lösbar ist. Wird nun der im Kraftfahrzeugschloss vorhandene Elektromotor als Antriebseinrichtung für die Ausstelleinrichtung eingesetzt, so kann auf einen weiteren Antrieb für die Ausstelleinrichtung verzichtet werden. Dies reduziert Bauraum, Kosten und Bauteile, so dass sich eine Reihe von Vorteilen aus einer mehrere Funktionen umfassenden Antriebseinrichtung ergeben.

Erfindungsgemäß weist die Ausstelleinrichtung ein Ausstellmittel auf, wobei mittels des Ausstellmittels das Kraftfahrzeugteil in die Öffnungsstellung bewegbar ist. Wird ein Ausstellmittel verwendet, so kann zielgerichtet auf Bestandteile des Kraftfahrzeuges im Bereich des Kraftfahrzeugschlosses eingewirkt werden. Insbesondere ist es dabei möglich, zum Beispiel ein separates Ausstellmittel im Kraftfahrzeugschloss zu bewegen, der mit einem dem Kraftfahrzeugschloss zusammenwirkenden weiteren Bauteil des Kraftfahrzeuges zusammenwirkt, so dass eine Relativkraft zwischen Schloss und weiterem Bauteil erzielbar ist.

Dabei kann das Ausstellmittel in einer Variante der Erfindung beispielsweise aus einem aus dem Kraftfahrzeugschloss heraus bewegbaren Stößel gebildet sein. Dabei kann der Stößel zum Beispiel eine Verzahnung aufweisen, über die der Stößel antreibbar und aus dem Schloss heraus bewegbar ist. Je nach Einsatzgebiet des erfindungsgemäßen Kraftfahrzeugschlosses ist es dann möglich, einen mehr oder weniger großen Hub einerseits durch den Antrieb des Ausstellmittels wie auch über die Länge des Ausstellmittels einzustellen. Erfindungsgemäß rückt das Ausstellmittel mit einem Schlosshalter, insbesondere einem Schlosshalterbolzen oder Schlosshalterbügel, zusammen. Das Gesperre wirkt beim Einsatz des Kraftfahrzeugschlosses in einer Seitentür, Schiebetür oder Klappe zumeist mit einem am Kraftfahrzeug befestigten Schlosshalter zusammen. Ein Bewegen des Gesperres in Richtung des Schlosshalters bewirkt dabei, dass das Gesperre gesperrt wird. Eine umgekehrte Bewegung ist natürlich ebenso vorstellbar und möglich. Wird nun aufgrund mangelndem Türdichtungsdruckes die Tür nicht vollständig in eine Öffnungsstellung bewegt, so kann das Ausstellmittel unmittelbar auf den Schlosshalter einwirken und beispielsweise mit einem Stößel die Tür in eine Öffnungsstellung bewegen. Dabei ist das Stellmittel bzw. Ausstellmittel in unmittelbarer Nähe des Gesperres angeordnet, was wiederum vorteilhaft in Bezug auf den Bauraum ist.

Eine weitere Ausführungsform ergibt sich dann, wenn ein weiteres Ausstellmittel mit einem Kraftfahrzeugelement, insbesondere einer Türdichtung zusammenwirkt. Das Ausstellmittel als Bestandteil des Kraftfahrzeugschlosses ist im geschlossenen Zustand der beispielsweise Kraftfahrzeugtür in unmittelbarer Nähe der Dichtung der Tür angeordnet oder liegt sogar unmittelbar an der Türdichtung an. In vorteilhafter Weise kann nun ein Ausstellmittel auf die Türdichtung einwirken und eine Relativkraft erzeugen, die die Tür in eine Öffnungsstellung bewegt. Die Tür wird somit aus der Schließstellung in die Öffnungsstellung bewegt bzw. gedrückt.

In vorteilhafter Weise kann das Ausstellmittel formschlüssig und/oder kraftschlüssig mit einem weiteren Bauteil des Kraftfahrzeugs, und insbesondere einem Schlosshalter zusammenwirken. Durch die Ausbildung geeigneter Formen kann das Ausstellmittel unmittelbar mit dem Schlosshalter zusammenwirken. Ist beispielsweise ein Schlosshalterbolzen im Einsatz, so kann ein Formschluss des Ausstellmittels mit einer Öffnung, beispielsweise einer Vertiefung im Schlosshalterbolzen, der zur Montage dient, formschlüssig zusammenwirken und beispielsweise in die Öffnung eingreifen. Hierdurch ist ein äußerst kostengünstiges und sicheres Halten der zum Beispiel Kraftfahrzeugtür möglich.

Es ist ebenfalls vorstellbar, dass das Ausstellmittel den Schlosshalter zumindest bereichsweise formschlüssig umgreift, so dass einerseits eine ausreichende Kraft auf den Schlosshalter ausübbar ist und dass darüber hinaus ein Formschluss in der Weise gewährleistet wird, dass eine Positionierung, das heißt ein Halten der Kraftfahrzeugtür in der Öffnungsstellung ermöglicht wird.

Je nach Ausbildung des Ausstellmittels ist aber auch eine kraftschlüssige Verbindung zwischen Ausstellmittel und Schlosshalter vorstellbar. Wird beispielsweise das Ausstellmittel in einer Variante mit einem Werkstoff, wie beispielsweise Kunststoff oder Gummi beschichtet, so kann auch ein ausreichender Kraftschluss zwischen Ausstellmittel und Schlosshalter zur Verfügung gestellt werden, um die Tür oder Klappe in ihrer Öffnungsstellung zu halten, wobei bevorzugt ein Reibschluss erzeugt wird. Es ist aber auch eine Kombination aus Reibschluss und Formschluss vorstellbar.

In einer weiteren Ausführungsform wirkt das Ausstellmittel mittels einer magnetischen Kraft mit dem Schlosshalter zusammen. Wird das Ausstellmittel zum Beispiel magnetisch ausgeführt, so ist ein sehr leichtes Halten des Kraftfahrzeugteils in der Öffnungsstellung ermöglicht. Eine Vielzahl von Bauteilen eines Kraftfahrzeugs sind ferromagnetisch, so dass das Ausstellmittel in der Lage ist, mit den weiteren Bestandteilen des Kraftfahrzeugs zusammenzuwirken und eine magnetische Haltekraft auszuüben. Bevorzugt wirkt das magnetische Ausstellmittel mit dem Schlosshalter zusammen und kann somit die zum Beispiel Kraftfahrzeugtür in der Öffnungsstellung halten. Ein Bediener kann in dieser Öffnungsstellung die Tür ergreifen und das Ausstellmittel vom Schlosshalter lösen. Dazu muss lediglich die magnetische Kraft zwischen Ausstellmittel und Schlosshalter überwunden werden. Dies gibt dem Nutzer des Kraftfahrzeugs die Möglichkeit einer haptischen Rückmeldung und somit das Gefühl einer Sicherheit, dass die Tür in der Öffnungsstellung sicher gehalten ist. Dies gilt natürlich ebenso für ein form- und/oder reib- und/oder kraftschlüssiges Halten des Kraftfahrzeugteils.

Erfindungsgemäß ist das Kraftfahrzeugteil eine Kraftfahrzeugtür, wobei die Kraftfahrzeugtür mittels des Ausstellmittels so weit in eine Öffnungsstellung bringbar ist, dass in einen Öffnungsspalt zwischen Kraftfahrzeugtür und Karosserie eingreifbar ist. Insbesondere für eine Kraftfahrzeugtür eignet sich die Verwendung eines Ausstellmittels, das die Kraftfahrzeugtür bevorzugt als elektrische Tür, das heißt mit einem E-Schloss versehene Tür ausführbar ist, wobei eine derartige Tür zum Beispiel auch ohne Außenbetätigungsgriff ausführbar ist. Dies ist insbesondere aus ästhetischen Gründen und bei der Formgebung des Kraftfahrzeugs von Vorteil.

Kann mittels der erfindungsgemäßen Ausstelleinrichtung einerseits ein Spalt zwischen Kraftfahrzeugtür und weiteren Bestandteilen des Kraftfahrzeugs erzielt werden und die Tür in eine Öffnungsstellung bewegt werden, so kann der Bediener einerseits sicher sein, dass sich die Tür nicht selbständig öffnet und andererseits besteht auch die Möglichkeit, mittels des Ausstellmittels bzw. der Ausstelleinrichtung die Tür wieder zumindest bereichsweise in eine Schließstellung zurückzubewegen. Hierdurch wird ein automatisches Öffnen und Schließen zumindest im Bereich zwischen einer Schließstellung der Tür und einer Öffnungsstellung der Tür ermöglicht. Mittels des Ausstellmittels bzw. der Ausstelleinrichtung kann die Kraftfahrzeugtür dann von einer Öffnungsstellung in eine Schließstellung und zumindest so weit in eine Schließstellung zurückbewegt werden, dass ein automatisches Zuziehen zum Beispiel mittels des Gesperres ermöglicht wird.

Nachfolgend wird die Erfindung unter Bezugnahme auf die anliegenden Zeichnungen anhand bevorzugter Ausführungsformen näher erläutert.

Es zeigen:
- Fig. 1: eine Draufsicht auf ein Kraftfahrzeug mit einer sich in einer Öffnungsstellung befindlichen Seitentür,
- Fig. 2: eine Detailansicht auf die sich in der Öffnungsstellung befindenden Seitentür gemäß der Fig. 1 und im Besonderen der Ansicht II, in einer Schnittdarstellung, die die prinzipielle Anordnung zwischen einem in der Seitentür befindlichen Kraft-fahrzeugschloss und Ausstelleinrichtung zeigt, die mit einem Schlosshalter zusammenwirkt,
- Fig. 3: wiederum eine vergrößerte Darstellung des Schnitts gemäß der Fig. 2 im Bereich des Schlosshalters, die das Zusammen-spiel zwischen Schlosshaltern und Ausstelleinrichtung in einem Ausführungsbeispiel verdeutlicht,
- Fig. 4: ebenfalls eine Schnittdarstellung gemäß der Fig. 2 im Bereich des Schlosshalters mit alternativen Ausführungsformen von Ausstelleinrichtungen und
- Fig. 5: eine Ansicht auf einen Schlosshalter gemäß der Linie V-V aus Fig. 3 mit einer weiteren alternativen Ausführungsform eines Ausstellmittels.

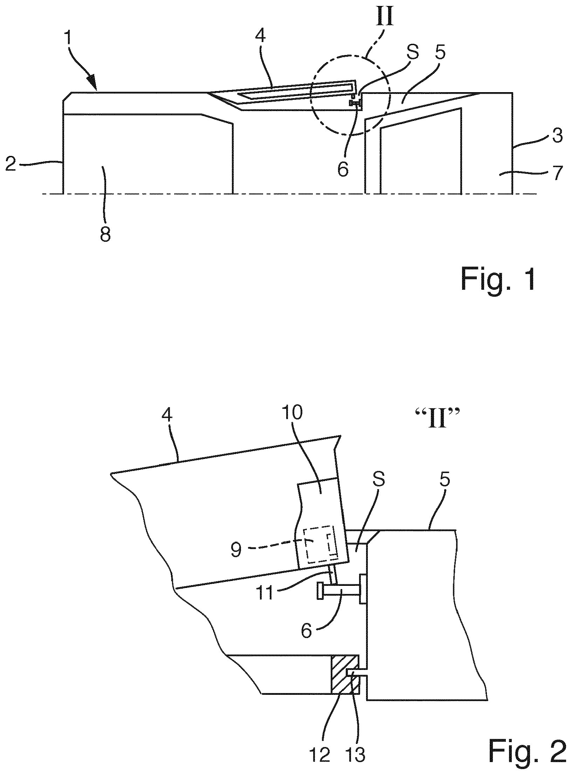

In der Fig. 1 ist eine Draufsicht auf ein prinzipiell dargestelltes Kraftfahrzeug 1 dargestellt. Das Kraftfahrzeug 1 weist einen Frontbereich 2, einen Heckbereich 3 sowie eine Seitentür 4 auf. Die Kraftfahrzeugseitentür 4 ist in einer Öffnungsstellung wiedergegeben, wobei sich die Öffnungsstellung dadurch auszeichnet, dass sich zwischen der Kraftfahrzeugkarosserie 5 und Seitentür 4 ein Öffnungsspalt S ergibt. Im Bereich des Öffnungsspalts S ist ein Schlosshalter 6 zu erkennen, der in diesem Ausführungsbeispiel als Schließbolzen ausgeführt ist. Auch wenn in diesem Ausführungsbeispiel die erfindungsgemäße Ausstelleinrichtung am Beispiel einer Kraftfahrzeugtür 4 wiedergegeben ist, so ist dies nicht beschränkend. Vielmehr ist es vorstellbar, die Ausstelleinrichtung auch zum Beispiel für eine sich im Kraftfahrzeugheck 3 befindliche Heckklappe 7 oder beispielsweise für eine im Bereich der Kraftfahrzeugfront befindliche Motorhaube 8 zu verwenden.

In der Fig. 2 ist eine vergrößerte Ansicht des Details II aus Fig. 1 im Bereich des Schlosshalters 6 dargestellt. Gleiche Bauteile sind in den Figuren mit gleichen Bezugsziffern versehen. Zur besseren Verdeutlichung der Anordnung der Ausstelleinrichtung 9 ist die Detailansicht II in einem Schnitt durch das Kraftfahrzeug 1 oberhalb des Schlosshalters 6 wiedergegeben. Die Ausstelleinrichtung 9 ist in ein Kraftfahrzeugtürschloss 10 integriert und weist ein Ausstellmittel 11 auf, das unmittelbar mit dem Schlosshalter 6 zusammenwirkt. Das Ausstellmittel 11 ist in diesem Ausführungsbeispiel derart in der Ausstelleinrichtung bewegbar, dass das Ausstellmittel 11 aus der Kraftfahrzeugtür 4 heraus bewegbar ist. Eine Türdichtung 12 ist auf Abkantungen 13 der Kraftfahrzeugkarosserie 5 befestigt. Die Türdichtung 12 umschließt die Kraftfahrzeugtür vorzugsweise umfänglich und dichtet den Innenraum des Kraftfahrzeugs 1 gegen die Umwelt ab. Neben dieser Dichtfunktion erzeugt die Türdichtung 12 eine Kraft auf die Kraftfahrzeugtür 4 und insbesondere dann, wenn sich die Kraftfahrzeugtür in der vollständig geschlossenen Schließstellung befindet. Dieser Türdichtungskraft kann von dem Kraftfahrzeugtürschloss 10 genutzt werden, um das Gesperre zu öffnen, indem lediglich die Sperrklinke von der Drehfalle entfernt wird und die Türdichtungskraft bzw. der Türdichtungsdruck eine Drehbewegung der Drehfalle, das heißt ein Öffnen des Gesperres, erwirkt. Die Ausstelleinrichtung 9 bewegt die Kraftfahrzeugtür 4 dann vollständig in die Kraftfahrzeugtür 4 in der Öffnungsstellung.

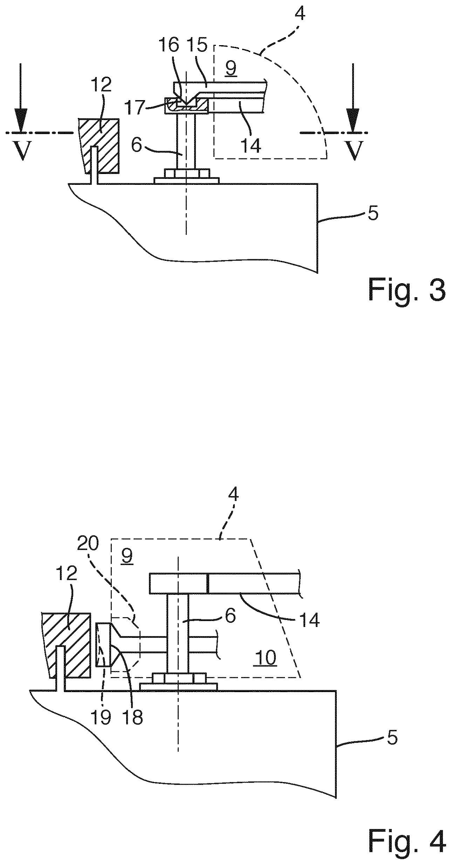

In der Fig. 3 ist eine weitere Detaildarstellung im Bereich von Schlosshalter 6 und Türdichtung 12 wiedergegeben. Der Schlosshalter 6 ist als Schließbolzen mit der Kraftfahrzeugkarosserie 5 verschraubt. Dargestellt ist ein erstes Ausstellmittel 11 in Form eines Stößels 14, der unmittelbar auf den Schließbolzen 6 wirkt. Der Stößel 14 kann beispielsweise magnetisch ausgeführt sein und entgegen dem dargestellten Ausführungsbeispiel auch ohne das formschlüssig in den Schließbolzen 6 eingreifende Ausstellmittel 15 mit dem Schließbolzen 6 zusammenwirken. Dargestellt ist eine Kombination aus einem Stößel 14 und einem formschlüssig in den Schließbolzen 6 eingreifendes Ausstellmittel 15. Das formschlüssig ausgebildete Ausstellmittel 15 weist eine kegelförmige Spitze 16 auf, die in eine Schlüsselöffnung 17 des Schließbolzens 6 eingreift. Das formschlüssig in den Schließbolzen 6 eingreifende Ausstellmittel 15 kann aus einem federnden Werkstoff bestehen, wie beispielsweise Kunststoff oder Federstahl, und/oder federnd in der Schlüsselöffnung 17 anliegen. Auf jeden Fall wirkt das formschlüssige Ausstellmittel 15 eine ausreichende Kraft auf den Schließbolzen 6 aus, um die Kraftfahrzeugseitentür 4 in der Öffnungsposition bzw. Öffnungsstellung zu halten. Beide in der Fig. 3 dargestellten Ausstellmittel 14, 15 sind aus der Kraftfahrzeugseitentür 4 zumindest bereichsweise herausfahrbar.

Die Fig. 4 zeigt ein weiteres Ausführungsbeispiel einer Ausstelleinrichtung 9 im Bereich des Schlosshalters 6. Ein wiederum als Stößel 16 ausgebildetes Ausstellmittel 11 wirkt auf den Schließbolzen 6, wobei der Stößel 16 sich nicht aus der Kraftfahrzeugtür 4 herausbewegt. Alternativ oder ergänzend kann ein weiteres Ausstellmittel 18 vorgesehen sein, das aus der Kraftfahrzeugtür 4 heraus bewegbar ist und gegen die Türdichtung 12 wirkt. Das Ausstellmittel 18 kann dabei beispielsweise auch als Saugnapf 19 ausgeführt sein. Damit das Ausstellmittel 18 bündig in der Kraftfahrzeugtür 4 aufgenommen werden kann, weist die Kraftfahrzeugtür 4 oder das Kraftfahrzeugtürschloss 10 eine Vertiefung 20 auf, in die das Ausstellmittel 18 hinein und heraus fahrbar ist.

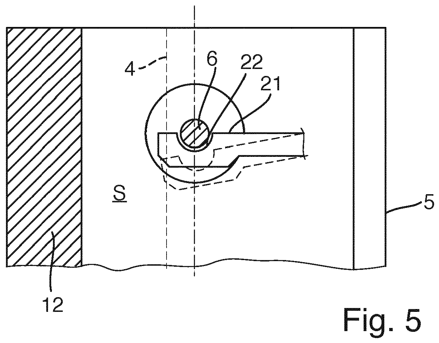

In der Fig. 5 ist eine Ansicht gemäß der Linie V-V aus der Fig. 4 wiedergegeben. Das in Form eines Greiferfingers 21 ausgebildete Ausstellmittel weist eine Ausnehmung 22 auf, die den Schließbolzen 6 zumindest formschlüssig und zumindest bereichsweise umgreift. Die Kraftfahrzeugseitentür 4, hier als gestrichelte Linie angedeutet, befindet sich in einer Öffnungsstellung, so dass sich ein Spalt S ergibt, in den ein Bediener hineingreifen und die Tür vollständig öffnen kann. Dargestellt ist somit die Öffnungsstellung. In einer Schließstellung würde die Kraftfahrzeugtür 4 gegen die Türdichtung 12 anliegen und es läge kein Spalt S vor.

Wird die Kraftfahrzeugtür 4 nun aus der in der Fig. 5 dargestellten Öffnungsstellung heraus vollständig geöffnet, so ist der Greiferfinger 21 in der Lage, sich in die gestrichelt dargestellte Position zu bewegen. Dies kann gegen eine Federkraft im Inneren des Kraftfahrzeugtürschlosses oder der Ausstelleinrichtung geschehen, der Greiferfinger 21 kann aber auch aus einem federnden Werkstoff bestehen, so dass zwar ein ausreichender Anlagedruck gegen den Schließbolzen vorliegt, dass die Kraftfahrzeugtür 4 sicher in der Öffnungsstellung gehalten wird, der Bediener die Kraftfahrzeugtür aber ergreifen und ohne größeren Widerstand öffnen kann. Darüber hinaus ist es auch vorstellbar, dass der Greiferfinger 21 zusätzlich magnetisch ausgeführt ist, um ein sicheres Halten der Kraftfahrzeugtür in der Öffnungsstellung zu ermöglichen.

Befindet sich die Kraftfahrzeugtür 4 in einer Schließstellung, so liegt die Kraftfahrzeugtür 4 an der Türdichtung 12 an. Wird nun das Kraftfahrzeugtürschloss 10 elektrisch geöffnet, so wird die Kraftfahrzeugtür 4 durch den Türdichtungsdruck und mittels der Ausstelleinrichtung 9 in die Öffnungsstellung bewegt. Dabei verfährt das Ausstellmittel 11, 15, 18 bzw. der Aktuator 11, 15, 18 linear oder quasi linear und hält sich am Schlosshalterbügel 6 magnetisch fest und/oder lässt sich ähnlich einem Motorhaubenfanghaken, wie beispielsweise in der Fig. 5 dargestellt, zur Seite bewegen, die Tür wird dabei sicher in der Öffnungsstellung gehalten. Nach dem Öffnen, insbesondere nach dem vollständigen Öffnen der Kraftfahrzeugtür 4 kann das Ausstellmittel, insbesondere der Aktuator, Stößel, Saugnapf und/oder Greiferfinger, wieder eingezogen werden. In einer alternativen Ausführungsform ist es vorstellbar, das Ausstellmittel 11, 15, 18 für das Schließen der Kraftfahrzeugtür 4 zu verwenden, um beispielsweise Schließenergie aufzunehmen, die dann wiederum zum Bewegen der Kraftfahrzeugtür 4 aus der Schließstellung in die Öffnungsstellung hinein bereitstellbar ist.

### Bezugszeichenliste

- 1: Kraftfahrzeug
- 2: Kraftfahrzeugfront
- 3: Kraftfahrzeugheck
- 4: Seitentür, Kraftfahrzeugseitentür
- 5: Kraftfahrzeugkarosserie
- 6: Schlosshalter, Schließbolzen, Schlosshalterbügel
- 7: Heckklappe
- 8: Motorhaube
- 9: Ausstelleinrichtung
- 10: Kraftfahrzeugtürschloss
- 11, 15, 18: Ausstellmittel, Aktuator
- 12: Türdichtung
- 13: Abkantungen
- 14: Stößel
- 16: kegelförmige Spitze
- 17: Schlüsselöffnung
- 19: Saugnapf
- 20: Vertiefung
- 21: Greiferfinger
- 22: Ausnehmung

- S: Spalt, Öffnungsspalt

## Patentansprüche

1. Kraftfahrzeugschloss aufweisend ein Gesperre mit einer Drehfalle und mindestens einer Sperrklinke, wobei mittels der Sperrklinke eine Drehbewegung der Drehfalle sperrbar ist, eine Antriebseinrichtung, mit der die Sperrklinke aus einer Sperrstellung in eine Freigabestellung für das Gesperre überführbar ist, und einer Ausstelleinrichtung (11, 15, 18), wobei mittels der Ausstelleinrichtung (11, 15, 18) eine das Kraftfahrzeugschloss aufnehmende Kraftfahrzeugtür (4) aus einer Schließstellung heraus in eine Öffnungsstellung bewegbar ist, **dadurch gekennzeichnet, dass** die Ausstelleinrichtung (11, 15, 18) die Kraftfahrzeugtür (4) in seiner Öffnungsstellung hält, so dass ein selbständiges Öffnen der Kraftfahrzeugtür (4) über die Öffnungsstellung hinaus unterbindbar ist, wobei die Ausstelleinrichtung (11, 15, 18) in das Kraftfahrzeugschloss zumindest teilweise integriert ist, wobei die Ausstelleinrichtung (11, 15, 18) ein Ausstellmittel (11, 15, 18) aufweist, wobei das Ausstellmittel (11, 15, 18) derart in der Ausstelleinrichtung (11, 15, 18) bewegbar ist, dass das Ausstellmittel (11, 15, 18) aus der Kraftfahrzeugtür (4) heraus bewegbar und mittels des Ausstellmittels (11, 15, 18) die Kraftfahrzeugtür (4) in die Öffnungsstellung bewegbar ist, wobei das Ausstellmittel (11, 15, 18) mit einem Schlosshalter (6), Schlosshalterbolzen oder Schlosshalterbügel zusammenwirkt.

2. Kraftfahrzeugschloss nach Anspruch 1, **dadurch gekennzeichnet, dass** die Antriebseinrichtung einen Antrieb für die Ausstelleinrichtung (11, 15, 18) bildet.

3. Kraftfahrzeugschloss nach Anspruch 1 oder 2, **dadurch gekennzeichnet, dass** das Ausstellmittel (11, 15, 18) einen aus dem Kraftfahrzeugschloss heraus bewegbaren Stößel (14) aufweist.

4. Kraftfahrzeugschloss nach einem der Ansprüche 1 bis 3, **dadurch gekennzeichnet, dass** ein weiteres Ausstellmittel (18) mit einem Kraftfahrzeugelement (12), insbesondere einer Türdichtung (12) zusammenwirkt.

5. Kraftfahrzeugschloss nach einem der Ansprüche 1 bis 4, **dadurch gekennzeichnet, dass** das Ausstellmittel (11, 15, 18) formschlüssig und/oder kraftschlüssig mit dem Schlosshalter (6) zusammenwirkt.

6. Kraftfahrzeugschloss nach einem der Ansprüche 1 bis 5, **dadurch gekennzeichnet, dass** das Ausstellmittel (11, 15, 18) mittels einer magnetischen Kraft mit dem Schlosshalter (6) zusammenwirkt.

7. Kraftfahrzeugschloss nach einem der Ansprüche 1 bis 6, **dadurch gekennzeichnet, dass** das Kraftfahrzeugteil (4) ein Kraftfahrzeugtürschloss (4) ist und dass die Kraftfahrzeugtür (4) mittels des Ausstellmittels (11, 15, 18), so weit in eine Öffnungsstellung bringbar ist, dass in einen Öffnungsspalt (S) zwischen Kraftfahrzeugtür (4) und einer Kraftfahrzeugkarosserie (5) eingreifbar ist.

8. Kraftfahrzeugschloss nach einem der Ansprüche 1 bis 7, **dadurch gekennzeichnet, dass** mittels des Ausstellmittels (11, 15, 18) die Kraftfahrzeugtür (4) von der Öffnungsstellung zumindest soweit zurück in die Schließstellung zurückbewegbar ist, dass ein automatisches Zuziehen ermöglicht ist.

## Claims

1. Motor vehicle latch having a locking mechanism with a catch and at least one pawl, a rotary movement of the catch being able to be locked by means of the pawl, a drive device by means of which the pawl can be transferred out of a locking position into a release position for the locking mechanism, and an adjusting device (11, 15, 18), a motor vehicle door (4) accommodating the motor vehicle latch being movable out of a closed position into an open position by means of the adjusting device (11, 15, 18), **characterized in that** the adjusting device (11, 15, 18) holds the motor vehicle door (4) in the open position thereof such that an independent opening of the motor vehicle door (4) beyond the open position can be prevented, the adjusting device (11, 15, 18) being at least partially integrated into the motor vehicle latch, the adjusting device (11, 15, 18) having an adjusting means (11, 15, 18), the adjusting means (11, 15, 18) being movable in the adjusting device (11, 15, 18) such that the adjusting means (11, 15, 18) can be moved out of the motor vehicle door (4) and the motor vehicle door (4) can be moved into the open position by means of the adjusting means (11, 15, 18), the adjusting means (11, 15, 18) interacting with a latch holder (6), latch holder bolt or latch holder bracket.

2. Motor vehicle latch according to claim 1, **characterized in that** the drive device forms a drive for the adjusting device (11, 15, 18).

3. Motor vehicle latch according to either claim 1 or claim 2, **characterized in that** the adjusting means (11, 15, 18) has a plunger (14) which can be moved out of the motor vehicle latch.

4. Motor vehicle latch according to any of claims 1 to 3, **characterized in that** a further adjusting means (18) interacts with a motor vehicle element (12), in particular a door seal (12).

5. Motor vehicle latch according to any of claims 1 to 4, **characterized in that** the adjusting means (11, 15, 18) cooperates form-fittingly and/or force-fittingly with the latch holder (6).

6. Motor vehicle latch according to any of claims 1 to 5, **characterized in that** the adjusting means (11, 15, 18) cooperates with the latch holder (6) by means of a magnetic force.

7. Motor vehicle latch according to any of claims 1 to 6, **characterized in that** the motor vehicle part (4) is a motor vehicle door latch (4) and **in that** the motor vehicle door (4), by means of the adjusting means (11, 15, 18), can be brought so far into an open position that it is possible to engage into an opening gap (S) between the motor vehicle door (4) and a motor vehicle body (5).

8. Motor vehicle latch according to any of claims 1 to 7, **characterized in that** the motor vehicle door (4), by means of the adjusting means (11, 15, 18), can be moved back from the open position into the closed position at least far enough to allow automatic closing to take place.

## Revendications

1. Serrure de véhicule automobile présentant un mécanisme de verrouillage comportant un loquet rotatif et au moins un cliquet de verrouillage, un mouvement de rotation du loquet rotatif pouvant être verrouillé au moyen du cliquet de verrouillage, un dispositif d'entraînement au moyen duquel le cliquet de verrouillage peut être transféré d'une position de verrouillage vers une position de libération pour le mécanisme de verrouillage, et un dispositif de déploiement (11, 15, 18), une porte de véhicule automobile (4) logeant la serrure de véhicule automobile pouvant être déplacée d'une position de fermeture vers une position d'ouverture au moyen du dispositif de déploiement (11, 15, 18), **caractérisée en ce que** le dispositif de déploiement (11, 15, 18) maintient la porte de véhicule automobile (4) dans sa position d'ouverture de manière à empêcher une ouverture autonome de la porte de véhicule automobile (4) au-delà de la position d'ouverture, le dispositif de déploiement (11, 15, 18) étant au moins partiellement intégré dans la serrure de véhicule automobile, le dispositif d'ouverture (11, 15, 18) présentant un moyen de déploiement (11, 15, 18), le moyen de déploiement (11, 15, 18) pouvant être déplacé dans le dispositif de déploiement (11, 15, 18) de telle sorte que le moyen de déploiement (11, 15, 18) peut être déplacé hors de la porte de véhicule automobile (4) et la porte de véhicule automobile (4) peut être déplacée vers la position d'ouverture au moyen du moyen de déploiement (11, 15, 18), le moyen de déploiement (11, 15, 18) coopérant avec un maintien de serrure (6), un boulon de maintien de serrure ou une boucle de maintien de serrure.

2. Serrure de véhicule automobile selon la revendication 1, **caractérisée en ce que** le dispositif d'entraînement forme un entraînement pour le dispositif de déploiement (11, 15, 18).

3. Serrure de véhicule automobile selon la revendication 1 ou 2, **caractérisée en ce que** le moyen de déploiement (11, 15, 18) présente un poussoir (14) qui peut être déplacé hors de la serrure de véhicule automobile.

4. Serrure de véhicule automobile selon l'une des revendications 1 à 3, **caractérisée en ce qu'**un autre moyen de déploiement (18) coopère avec un élément de véhicule automobile (12), en particulier un joint de porte (12).

5. Serrure de véhicule automobile selon l'une des revendications 1 à 4, **caractérisée en ce que** le moyen de déploiement (11, 15, 18) coopère avec le maintien de serrure (6) par complémentarité de forme et/ou à force.

6. Serrure de véhicule automobile selon l'une des revendications 1 à 5, **caractérisée en ce que** le moyen de déploiement (11, 15, 18) coopère avec le maintien de serrure (6) au moyen d'une force magnétique.

7. Serrure de véhicule automobile selon l'une des revendications 1 à 6, **caractérisée en ce que** la partie de véhicule automobile (4) est une serrure de porte de véhicule automobile (4) et que la porte de véhicule automobile (4) peut être amenée dans une position d'ouverture au moyen du moyen de déploiement (11, 15, 18) de manière à ce qu'elle puisse s'insérer dans une fente d'ouverture (S) entre la porte de véhicule automobile (4) et une carrosserie de véhicule automobile (5).

8. Serrure de véhicule automobile selon l'une des revendications 1 à 7, **caractérisée en ce que** la porte de véhicule automobile (4) peut être ramenée de la position d'ouverture vers la position de fermeture, au moins suffisamment loin, au moyen du moyen de déploiement (11, 15, 18), afin de permettre une fermeture automatique.
